# EUROPEAN PATENT APPLICATION

(11) **EP 4 546 524 A1**
(43) Date of publication of application: **30.04.2025**
(21) Application number: 24208846.6
(22) Date of filing: 25.10.2024
(51) Int. Cl.: H01M 50/213, H01M 50/503, H01M 50/507, H01M 50/517

(54) **CONDUCTIVE MEMBER, BUSBAR AND BATTERY MODULE**

(30) Priority: 26.10.2023 CN 202322889751 U; 09.08.2024 WO PCT/CN2024/111008
(71) Applicant: Eve Energy Co., Ltd., Huizhou, Guangdong 516006 (CN)
(72) Inventor: LI, Fang, 516006 Huizhou (CN); WANG, Haixu, 516006 Huizhou (CN); LI, Xingrong, 516006 Huizhou (CN)
(74) Representative: HGF

(57) **Abstract**

A conductive member includes a first connection body and a second connection body connected to the first connection body. The first connection body is configured to be clamped with an outer peripheral side of one cell of two adjacent battery cells. The second connection body is configured to be in contact with a pole of the other cell of the two adjacent battery cells. The conductive member is clamped with the outer peripheral side of the battery cell through the first connection body. The busbar is configured to clamp the conductive member with the outer peripheral side of the battery cell through the first connection body.

## Description

### TECHNICAL FIELD

The present application relates to the technical field of batteries, for example, a conductive member, a busbar including the conductive member, and a battery module including the busbar.

### BACKGROUND

A cylindrical battery module generally includes two groups of battery cell contact system (CCS) assemblies and multiple battery cells. The multiple battery cells are disposed between two CCS assemblies, each group of CCS assemblies include a busbar, and batteries in the battery module are connected in series and in parallel through the busbar.

The busbar of the cylindrical battery module in the related art is usually connected to the battery cell through a resistance welding or a laser welding. However, since the capacity of the cylindrical battery cell is relatively small, hundreds or even thousands of battery cells are generally required to be connected in series and in parallel in the battery module. In the battery module with such a large number of battery cells, the positive electrode and the negative electrode of each battery cell are both welded to conductive members on the busbar so that the workload is relatively large and thus the production efficiency of the battery module is low. Moreover, the greater the number of welding spots is, the higher the risk of the welding failure is, which is not conducive to improving the production quality of the battery module.

### SUMMARY

In a first aspect, the present application provides a conductive member. The conductive member includes a first connection body and a second connection body connected to the first connection body, where the first connection body is configured to be clamped with an outer peripheral side of one battery cell of two adjacent battery cells in a first direction, and the second connection body is configured to be in contact with a pole of the other battery cell of the two adjacent battery cells in the first direction.

In some embodiments, the first connection body is provided with a first clamping hole, the first clamping hole penetrates through two sides of the first connection body in a thickness direction, the first clamping hole is configured to clamp the cell, the second connection body is provided with a second clamping hole, and the second clamping hole is configured to clamp the pole.

In some embodiments, a peripheral portion of the first clamping hole is provided with multiple first elastic clamping claws, the multiple first elastic clamping claws are configured to encircle a circle around a center of the first clamping hole, two adjacent first elastic clamping claws among the multiple first elastic clamping claws are distributed at intervals, and the multiple first elastic clamping claws are clamped with the outer peripheral side of the battery cell.

In some embodiments, a peripheral portion of the second clamping hole is provided with multiple second elastic clamping claws, the multiple second elastic clamping claws are configured to encircle a circle around a center of the second clamping hole, two adjacent second elastic clamping claws among the multiple second elastic clamping claws are distributed at intervals, and the multiple second elastic clamping claws are clamped with the pole.

In some embodiments, all the multiple second elastic clamping claws are disposed protruding on a side of the second connection body facing the battery cell, ends of all the multiple second elastic clamping claws facing away from the second connection body are each provided with an abutment end, and the abutment end abuts against a pole adapter plate located at an end of the battery cell.

In some embodiments, the second connection body is welded to the pole.

In some embodiments, the first connection body and the second connection body are distributed at intervals and in parallel in a second direction, the second direction is perpendicular to the first direction, the conductive member further includes a third connection body, the first connection body is connected to the third connection body at an included angle, and the second connection body is connected to the third connection body at an included angle.

In a second aspect, the present application provides a busbar. The busbar includes multiple conductive bars sequentially distributed in a first direction, where each conductive bar of the multiple conductive bars includes at least one conductive member of any one of claims 1 to 7, a first connection member of each conductive member of the at least one conductive member is configured to be connected to one battery cell of two adjacent battery cells in the first direction, a second connection member of each conductive member of the at least one conductive member is configured to be in contact with the other battery cell of the two adjacent battery cells in the first direction.

In some embodiments, when a conductive bar of the multiple conductive bars has at least two conductive members, all conductive members of a same conductive bar of the multiple conductive bars are sequentially distributed in a third direction, the third direction forms an included angle with the first direction, first connection bodies of two adjacent conductive members in a same conductive bar of the multiple conductive bars are connected with each other, and second connection bodies of two adjacent conductive members in a same conductive bar of the multiple conductive bars are spaced apart from each other.

In a third aspect, the present application provides a battery module. The battery module includes an insulating support, multiple battery cells, and the busbar described above, where the insulating support is disposed on a side of the multiple battery cells in a second direction, a flexible printed circuit (FPC) board is disposed on the insulating support, multiple conductive bars in the busbar are electrically connected to the FPC board, separately, a first limiting groove is disposed on a side of the insulating support facing the multiple battery cells, and each conductive bar of the multiple conductive bars is limited in the first limiting groove.

In some embodiments, a second limiting groove is also disposed on the insulating support, the second limiting groove is located on a side of the insulating support facing away from the first limiting groove, the FPC board is limited in the second limiting groove, the FPC board has multiple collection terminals, each conductive bar of the multiple conductive bars is correspondingly provided with one collection terminal, the insulating support is provided with a through hole in a penetrating manner, the through hole communicates with each of the first limiting groove and the second limiting groove, and a collection terminal of the multiple collection terminals passes through the through hole and is connected to a respective one of the multiple conductive bars.

In some embodiments, the first limiting groove includes multiple groove groups, the multiple groove groups are sequentially distributed in a first direction, the multiple groove groups are in one-to-one correspondence with the multiple conductive bars, each groove group of the multiple groove groups includes first grooves and second grooves, the first grooves in each groove group of the multiple groove groups are in one-to-one correspondence with the second grooves in each groove group of the multiple groove groups, a first connection body of each conductive bar of the multiple conductive bars is correspondingly provided with one first groove, a second connection body of each conductive bar of the multiple conductive bars is correspondingly provided with one second groove, the first connection body is limited in a first groove of the first grooves, the second connection body is limited in a second groove of the second grooves, and a first communication port is disposed between the first groove and a second groove corresponding to the first groove.

In some embodiments, when each groove group of the multiple groove groups has at least two first grooves and at least two second grooves, all the first grooves in each groove group of the multiple groove groups are sequentially distributed in a third direction, all the second grooves in each groove group of the multiple groove groups are sequentially distributed in the third direction, two adjacent first grooves of a same groove group of the multiple groove groups communicate with each other through a second communication port, and two adjacent second grooves of a same groove group of the multiple groove groups are spaced apart from each other.

In some embodiments, of two adjacent groove groups among the plurality of groove groups, a first groove of first grooves of one groove group of the two adjacent groove groups partially extends into a respective one of second grooves of the other groove group of the two adjacent groove groups.

In some embodiments, the insulating support is further provided with multiple third clamping holes, the multiple third clamping holes are in one-to-one correspondence with the multiple battery cells, and each of the multiple third clamping holes is configured to be clamped with a pole.

In some embodiments, the battery module further includes a negative output member and a positive output member, where the negative output member is clamped with a negative output terminal of the battery module, the positive output member is clamped with a positive output terminal of the battery module, and the negative output member and the positive output member are respectively disposed at two opposite ends of the insulating support in a first direction.

In some embodiments, the battery module further includes a box body, where a side of the multiple battery cells facing away from the insulating support is fixed to the box body by a structural adhesive layer.

Beneficial effects of the present application are as follows.

The conductive member provided in the present application is clamped with the outer periphery side of the battery cell through the first connection body, thereby reducing the welding parts between the conductive member and the battery cell, facilitating the connection between the conductive member and the battery cell, being conducive to improving the connection efficiency between the conductive member and the battery cell, and reducing the possibility of the welding failure between the conductive member and the battery cell.

Since the conductive bar in the busbar includes at least one conductive member, the busbar is configured to clamp the conductive member with the outer periphery side of the battery cell through the first connection body, thereby also reducing the welding parts between the busbar and the battery cell, being conducive to improving the assembly efficiency between the busbar and the battery cell, and facilitating the assembly between the busbar and the battery cell. In addition, the welding parts between the busbar and the battery cell are reduced; therefore, the risk of the welding failure between the busbar and the battery cell is reduced, and thus the production quality of the battery module is improved.

### BRIEF DESCRIPTION OF THE DRAWINGS

FIG. 1 is a stereo view of a battery module according to some embodiments (a box body is not shown in FIG. 1);
FIG. 2 is an assembly diagram of a busbar, a positive output member, a negative output member and a battery cell according to some embodiments;
FIG. 3 is an enlarge view of A of FIG. 2;
FIG. 4 is an exploded view of an insulating support, an FPC board, a positive output member and a negative output member according to some embodiments;
FIG. 5 is an enlarged view of B of FIG. 4;
FIG. 6 is a stereo view of a conductive bar viewed from one viewing angle according to some embodiments;

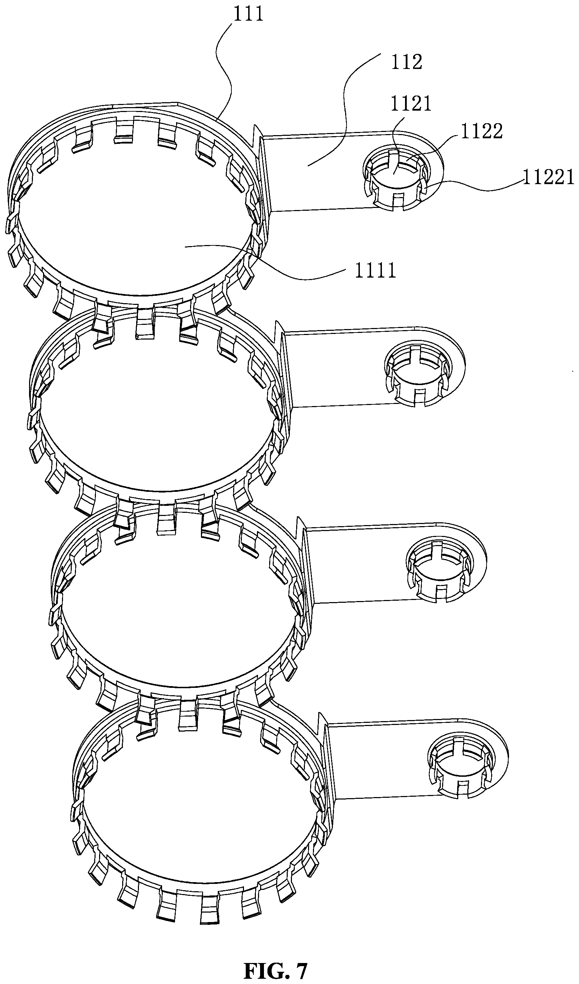

FIG. 7 a stereo view of a conductive bar viewed from another viewing angle according to some embodiments;
FIG. 8 is a stereo view of an insulating support according to some embodiments;
FIG. 9 is an enlarged view of C of FIG. 8;
FIG. 10 is an enlarged view of D of FIG. 8;
FIG. 11 is a stereo view of a positive output member according to some embodiments; and
FIG. 12 is a stereo view of a negative output member according to some embodiments.

### List of reference numbers

- 1: conductive bar
- 11: conductive member
- 111: first connection body
- 1111: first clamping hole
- 1112: first elastic clamping claw
- 112: second connection body
- 1121: second clamping hole
- 1122: second elastic clamping claw
- 11221: abutment end
- 113: third connection body
- 2: insulating support
- 21: groove group
- 211: first groove
- 212: second groove
- 22: through hole
- 23: first avoidance hole
- 24: third clamping hole
- 25: first communication opening
- 26: second communication opening
- 27: groove
- 28: second limiting groove
- 29: second avoidance hole
- 3: FPC board
- 31: collection terminal
- 4: positive output member
- 41: first main body
- 42: fourth connection body
- 421: fourth clamping hole
- 422: third elastic clamping claw
- 5: negative output member
- 51: second main body
- 52: fifth connection body
- 521: fifth clamping hole
- 522: fourth elastic clamping claw
- 53: connection segment
- 6: structural adhesive layer
- 100: busbar
- 200: battery cell
- 201: pole
- 202: pole adapter plate

### DETAILED DESCRIPTION

Technical solutions of embodiments of the present application will be described in conjunction with drawings below. The described embodiments are merely part of the embodiments of the present application, rather than all the embodiments of the present application.

In the description of the present application, terms "joined", "connected" and "fixed" are to be understood in a broad sense unless otherwise expressly specified and limited. For example, the term "connected" may refer to "securely connected", "detachably connected" or "integrated", may refer to "mechanically connected" or "electrically connected", or may refer to "connected directly", "connected indirectly through an intermediary" or "internal connection between two elements or interaction between two elements". For those of ordinary skill in the art, meanings of the preceding terms in the present application may be understood based on practical situations.

In the present application, unless otherwise expressly specified and limited, a first feature being "on" or "under" a second feature may include the first feature and the second feature being in direct contact, or may include the first feature and the second feature not being in direct contact but being in contact with each other through an additional feature between the first feature and the second feature. Moreover, the first feature being "on", "above" or "over" the second feature includes the first feature being directly on, above or over and obliquely on, above or over the second feature, or simply represents that the first feature is at a higher level than the second feature. The first feature being "under", "below" or "underneath" the second feature includes the first feature being directly under, below or underneath and obliquely under, below or underneath the second feature, or simply represents that the first feature is at a lower level than the second feature.

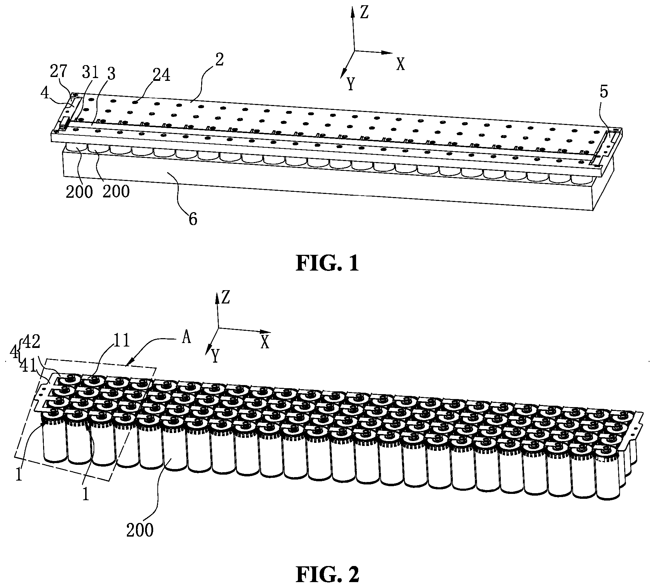

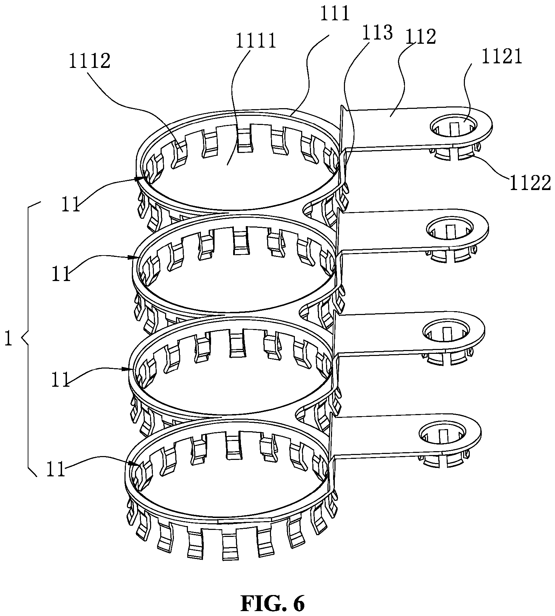

As shown in FIG. 1 to FIG. 6, the present application provides a busbar 100, and the busbar 100 is applied to a battery module. The battery module includes multiple battery cells 200. The battery cell 200 is a columnar battery cell 200. The battery cell 200 includes an encapsulation housing, a core, and a pole 201 protruding disposed at an end of the encapsulation housing. The core is encapsulated inside the encapsulation housing. The encapsulation housing is an electric conductor. A first tab of the core is electrically connected to the encapsulation housing. A second tab of the core is electrically connected to the pole 201. In this example, a negative tab of the core is electrically connected to the encapsulation housing, that is, the first tab is the negative tab, and the encapsulation housing serves as a negative electrode of the battery cell 200; while a positive tab of the core is electrically connected to the pole 201, that is, the second tab is the positive tab, and the pole 201 is a positive electrode of the battery cell 200.

The busbar 100 includes multiple conductive bars 1 sequentially distributed in a first direction. In this embodiment, the first direction is a length direction of the battery module, that is, an X direction in the drawings. Each conductive bar 1 includes at least one conductive member 11. The structure of the conductive member 11 is described below by incorporating the conductive member 11 into the busbar 100.

Each conductive member 11 includes a first connection body 111 and a second connection body 112 connected to the first connection body 111. The first connection body 111 is configured to be clamped with an outer peripheral side of one battery cell of two adjacent battery cells 200 in the first direction, that is, the first connection body 111 is clamped with the encapsulation housing of the one battery cell of the two adjacent battery cells 200 in the first direction. The second connection body 112 is configured to be in contact with the pole 201 of the other battery cell of the two adjacent battery cells 200 in the first direction. The first connection bodies 111 in two adjacent conductive bars 1 are spaced from each other. The conductive member 11 is clamped with the outer peripheral side of the battery cell 200 through the first connection body 111, thereby reducing welding parts between the conductive members 11 and the battery cells 200, facilitating the connections between the conductive members 11 and the battery cells 200, improving the connection efficiency between the conductive members 11 and the battery cells 200, and reducing the possibility of the welding failure between the conductive members 11 and the battery cells 200.

Each of the conductive bars 1 in the busbar 100 includes at least one conductive member 11, in this embodiment, the conductive member 11 is clamped with the outer peripheral side of the battery cell 200 through the first connection body 111, so that welding parts between the busbar 100 and the battery cells 200 can also be reduced, thereby facilitating improvement of the assembly efficiency between the busbar 100 and the battery cells 200, and facilitating the assembly of the busbar 100 and the battery cells 200. Moreover, the welding parts between the busbar 100 and the battery cells 200 are reduced; therefore, the risk of the welding failure between the busbar 100 and the battery cells 200 is reduced, and the production quality of the battery module is improved.

In an embodiment, the first connection body 111 is provided with a first clamping hole 1111 in a penetrating manner, the first clamping hole 1111 is configured to clamp the battery cell 200, and the first clamping hole 1111 penetrates through two sides of the first connection body 111 in a thickness direction. The second connection body 112 is provided with a second clamping hole 1121, and the second clamping hole 1121 is configured to clamp the pole 201. The first clamping hole 1111 is disposed on the first connection body 111 and is configured to clamp the outer peripheral side of the battery cell 200, so that the difficulty in connecting the battery cell 200 with the first connection body 111 is reduced. The second clamping hole 1121 is disposed on the second connection body 112 ad is configured to clamp the pole 201 of the battery cell 200, and the second connection body 112 is clamped with the pole 201 through the second clamping hole 1121, so that the second connection body 112 is electrically connected to the battery cell 200. The first connection body 111 and the second connection body 112 are each connected to the battery cell 200 in a manner of clamping, so that the electrical connection between the busbar 100 and the battery cell 200 does not need to be completed at all by means of welding, and the assembly efficiency between the busbar 100 and the battery cells 200 is further improved. Moreover, in a process of assembling the busbar 100 and the battery cells 200, no welding device is required. In addition, connection parts between the busbar 100 and the battery cells 200 have no a welding spot, thereby avoiding the welding failure between the busbar 100 and the battery cells 200, and thus ensuring the quality of the battery module.

In this example, the battery cell 200 is a cylindrical battery cell, and the first clamping hole 1111 is a circular hole. In other examples, the battery cell 200 may also be a square cylindrical battery cell. When the battery cell 200 is the square cylindrical battery cell, the first clamping hole 1111 is a square hole. In practical implementation, the shape of the first clamping hole 1111 is flexibly adjusted according to the shape of the battery cell 200.

A peripheral portion of the first clamping hole 1111 is provided with multiple first elastic clamping claws 1112, the multiple first elastic clamping claws 1112 encircles a circle around a center of the first clamping hole 1111, two adjacent first elastic clamping claws 1112 are distributed at intervals, and the multiple first elastic clamping claws 1112 are clamped with the outer peripheral side of the battery cell 200. The first elastic clamping claw 1112 is a conductor, and the first elastic clamping claw 1112 and the first connection body 111 are made of the same material. When the first clamping hole 1111 is clamped on the outer peripheral side of the battery cell 200, the first elastic clamping claw 1112 is clamped on the outer peripheral side of the battery cell 200. The first elastic clamping claw 1112 applies a certain clamping force to the battery cell 200, so that the first connection body 111 is firmly connected to the battery cell 200, thereby reducing the risk of the first connection 111 detaching from the battery cell 200.

A peripheral portion of the second clamping hole 1121 is provided with multiple second elastic clamping claws 1122, the multiple second elastic clamping claws 1122 are configured to encircle a circle around a center of the second clamping hole 1121, two adjacent second elastic clamping claws 1122 are distributed at intervals, and the multiple second elastic clamping claws 1122 are clamped with the pole 201. The second elastic clamping claw 1122 is an electric conductor, and the second elastic clamping claw 1122 and the second connection body 112 are made of the same material. The second elastic clamping claw 1122 is clamped on an outer peripheral side of the pole 201; therefore, the pole 201 is not easily removed from the second connection body 112 under the action of the second elastic clamping claw 1122, and moreover, a contact area between the busbar 100 and the pole 201 may also be increased through the second elastic clamping claw 1122.

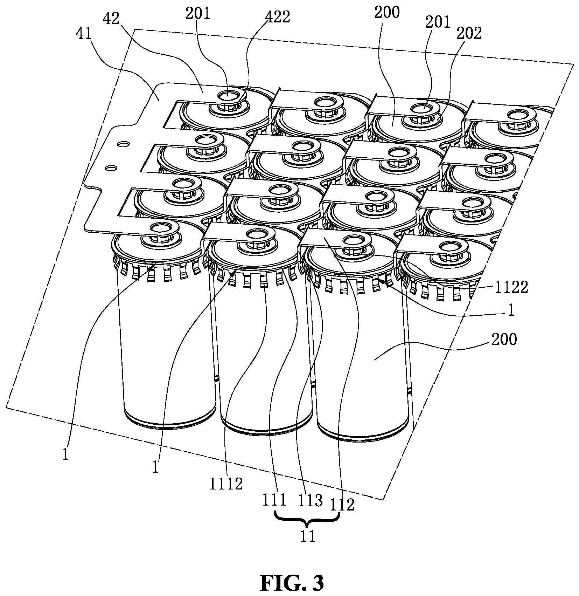

Referring to FIG. 3, a pole adapter plate 202 is disposed at an end of the pole 201 facing an interior of the core, the positive tab of the core is connected to the pole 201 through the pole adapter plate 202, and the pole adapter plate 202 is partially exposed at an axial end of the battery cell 200. All the second elastic clamping claws 1122 are protruding disposed on a side of the second connection body 112 facing the battery cell 200, and ends of all the second elastic clamping claws 1122 facing away from the second connection body 112 are provided with a abutment end 11221. The abutment end 11221 abuts against the pole adapter plate 202 located at one end of the battery cell 200. The abutment end 11221 abuts against the pole adapter plate 202, so that on the one hand, the pole adapter plate 202 is used to support the second elastic clamping claw 1122, which facilitates clamping the second connection body 112 in place; on the other hand, an electrical connection area between the busbar 100 and the battery cell 200 may be increased by using the abutment end 11221, thereby improving the reliability of connection between the busbar 100 and the battery cell 200.

In another embodiment, the second connection body 112 is welded to the pole 201, in this design, it is not necessary to dispose the second clamping hole 1121 on the second connection body 112, and the connection internal resistance is reduced.

The first connection body 111 and the second connection body 112 are distributed at intervals and in parallel in a second direction, and the second direction is perpendicular to the first direction. In this embodiment, the second direction is a height direction of the battery module (an axial direction of the battery cell 200), that is, the second direction is a Z direction in the drawings. The conductive member further includes a third connection body 113, the first connection body 111 is connected to the third connection body 113 at an included angle, and the second connection body 112 is connected to the third connection body 113 at an included angle. In practical implementation, two adjacent battery cells 200 in the first direction are generally disposed on the same horizontal plane, and the first connection body 111 and the second connection body 112 are configured to be distributed at intervals and in parallel in the second direction, which facilitates the clamping between the first connection body 111 and the battery cell 200 and between the second connection body 112 and the battery cell 200, and thus prevents the position interference between the first connection body 111 and the second connection body 112 adjacent to each other in the first direction.

In this example, the third connection body 113 is perpendicular to each of the first connection body 111 and the second connection body 112, which is conducive to reducing the size of the busbar 100. In other examples, an included angle between the third connection body 113 and the first connection body 111 and an included angle between the third connection body 113 and the second connection body 112 may be adjusted flexibly as required, which are not limited here.

In this embodiment, when the conductive bar 1 has at least two conductive members 11, all conductive members 11 of the same conductive bar 1 are sequentially distributed in a third direction. The third direction is perpendicular to the second direction, the third direction forms an included angle with the first direction, and the third direction is a width direction of the battery module, that is, the third direction is a Y direction in the drawings. First connection bodies 111 of two adjacent conductive members 11 in the same conductive bar 1 are connected to each other, and second connection bodies 112 of two adj acent conductive members 11 in the same conductive bar 1 are spaced from each other. In this example, the third direction is perpendicular to the first direction. The first connection bodies 111 of the two adjacent conductive members 11 in the same conductive bar 1 are connected to each other, so that all conductive members 11 in the same conductive bar 1 are connected in parallel, thereby satisfying the usage requirement.

Referring to FIG. 1 to FIG. 3, the battery module includes an insulating support 2, multiple battery cells 200, and a busbar 100 having any one of the foregoing structures. The insulating support 2 is disposed on a side of the battery cell 200 in the second direction (namely, the Z direction in the drawings), a flexible printed circuit (FPC) board 3 is disposed on the insulating support 2, and the flexible printed circuit board 3 is referred to as the FPC board 3. Multiple conductive bars 1 in the busbar 100 are each electrically connected to the FPC board 3. A first limiting groove is disposed on a side of the insulating support 2 facing the battery cell 200, and the conductive bar 1 is limited in the first limiting groove. The busbar 100 is limited by the first limiting groove on the insulating support 2 to facilitate the assembly of the battery module. In such the battery module, the busbar 100 using any one of the foregoing structures is connected to the battery cell 200, so that the assembly efficiency of the battery module is improved, the number of welding spots in the battery module is small, the probability of the occurrence of the welding failure is small, and further the quality of the battery module is good.

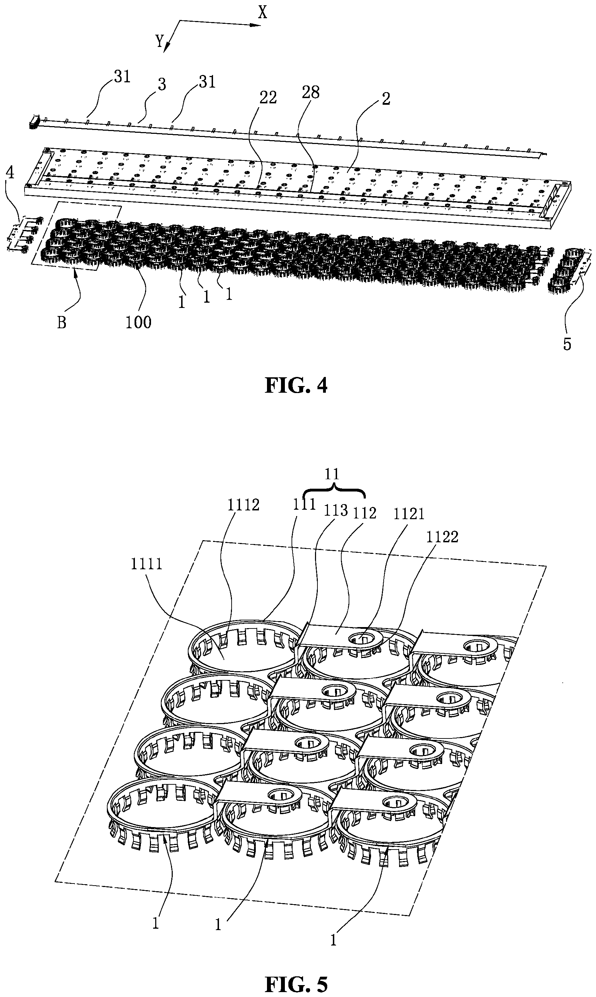

Referring to FIG. 4, a second limiting groove 28 is also disposed on the insulating support 2, the second limiting groove 28 is located on a side of the insulating support 2 facing away from the first limiting groove, and the FPC board 3 is limited in the second limiting groove 28. The FPC board 3 has multiple collection terminals 31, and each conductive bar 1 is correspondingly provided with one collection terminal 31. The insulating support 2 is provided with a through hole 22 in a penetrating manner, and the through hole 22 communicates with each of the first limiting groove and the second limiting groove 28. The collection terminal 31 is connected to the corresponding conductive bar 1 through the through hole 22. Since the first limiting groove and the second limiting groove 28 are respectively located at two opposite sides of the insulating support 2 in the second direction, the busbar 100 and the FPC board 3 are respectively limited in the first limiting groove and the second limiting groove 28, so that the busbar 100 and the FPC board 3 are respectively located at two opposite sides of the insulating support 2 in the second direction, and thus the space on the insulating support 2 is fully used, which facilitates the arrangement of the busbar 100 and the insulating support 2.

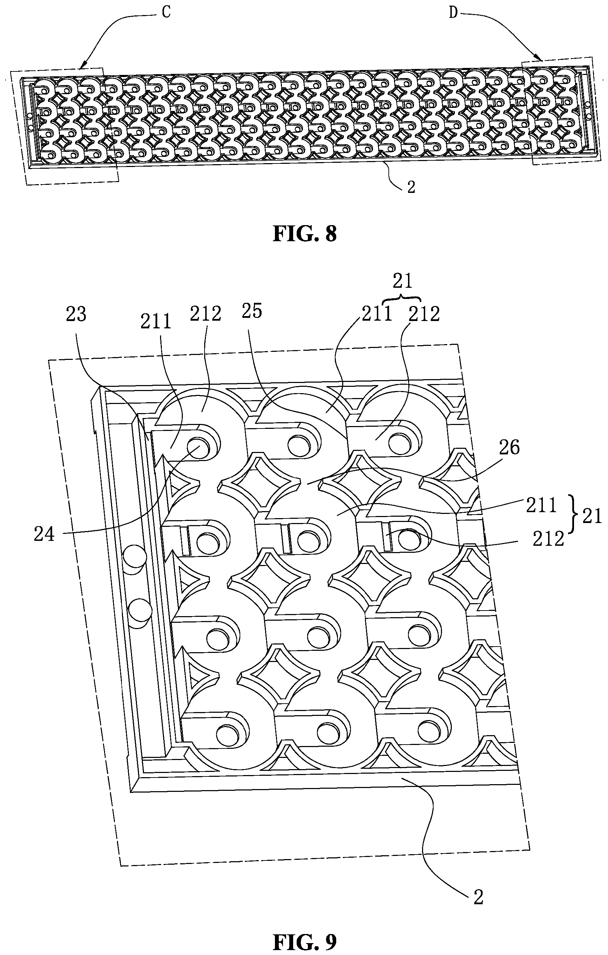

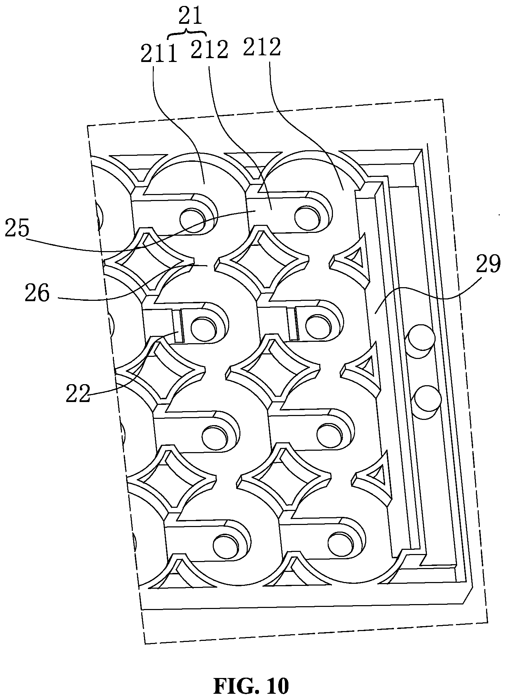

Referring to FIG. 8 to FIG. 10, the first limiting groove includes multiple groove groups 21, the multiple groove groups 21 are sequentially distributed in the first direction and are in one-to-one correspondence with the conductive bars 1. Each groove group 21 includes first grooves 211 and second grooves 212, and the first grooves 211 in each groove group 21 are in one-to-one correspondence with the second grooves 212 in each groove group 21. The first connection body 111 of each conductive bar 1 is correspondingly provided with one first groove 211, the second connection body 112 of each conductive bar 1 is correspondingly provided with one second groove 212, the first connection body 111 is limited in the first groove 211, the second connection body 112 is limited in the second groove 212, and a first communication port 25 is disposed between the first groove 211 and the corresponding second groove 212. In practical implementation, the third connection body 113 is located at the first communication port 25 and is avoided through the first communication port 25. The first connection body 111 in the conductive member 11 is limited by the first groove 211, the second connection body 112 in the conductive member 11 is limited by the second groove 212, thereby facilitating the positioning of each conductive member 11 and reducing the risk of displacement of the busbar 100 on the insulating support 2.

One through hole 22 is provided to penetrate through a groove bottom of each second groove 212, in this way, the collection terminal 31 may be connected to each conductive bar 1 through the through hole 22.

In an embodiment, when the groove group 21 has at least two first grooves 211 and at least two second grooves 212, all first grooves 211 in each groove group 21 are sequentially distributed in the third direction, and all second grooves 212 in each groove group 21 are sequentially distributed in the third direction. Two adjacent first grooves 211 of the same groove group 21 communicate with each other through a second communication port 26, and two adjacent second grooves 212 of the same groove group 21 are spaced apart from each other. The second communication port 26 may be configured to avoid a part connected two adjacent first connection bodies 111 in the same conductive bar 1.

After multiple rows of conductive members 11 are correspondingly assembled with the battery cells 200 in the first direction, the first connection bodies 111 and the second connection bodies 112 of two adjacent rows of conductive members 11 in the first direction are distributed one above the other, and a first groove of first grooves 211 of one groove group of two adjacent groove groups 21 partially extends into a respective one of second grooves 212 of the other groove group 21 of the two adjacent groove groups 21. The first groove 211 and the second groove 212 adjacent to each other in the first direction are partially overlapped, so that the insulating support 2 at the same part may enable the first connection bodies 111 and the second connection bodies 112 of the two adjacent rows of conductive members 11 in the first direction to be partially overlapped, which is conducive to improving the compactness of the internal structure of the battery module.

The second clamping hole 1121 penetrates through two sides of the second connection body 112 in the thickness direction. When the second connection body 112 is clamped with the pole 201, a top of the pole 201 may pass through the second clamping hole 1121 and protrude from the second connection body 112. In order to limit the battery cell 200 on the insulating support 2, the insulating support 2 is also provided with multiple third clamping holes 24. The third clamping holes 24 are in one-to-one correspondence with the multiple battery cells 200, and the third clamping hole 24 is configured to be clamped with the pole 201. After the second connection body 112 is clamped with the pole 201, the top of the pole 201 may be clamped in the third clamping hole 24 to avoid the busbar 100 from detaching from the insulating support 2 due to the movement of the battery cell 200 relative to the insulating support 2.

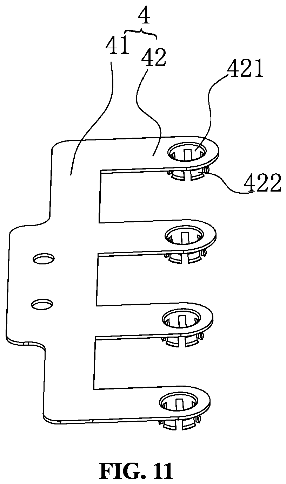

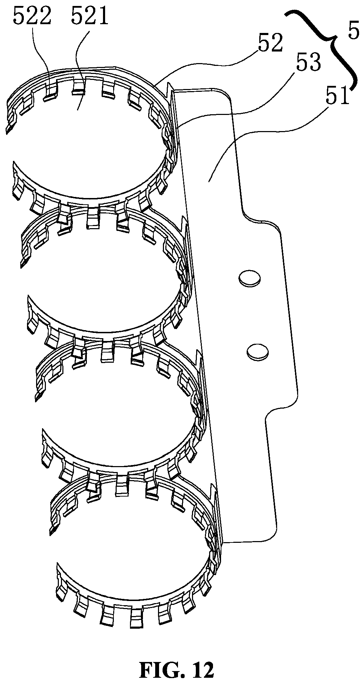

In this embodiment, referring to FIG. 1 to FIG. 4, FIG. 11 and FIG. 12, the battery module further includes a negative output member 5 and a positive output member 4. The negative output member 5 is clamped with a negative output terminal of the battery module, the positive output member 4 is clamped with a positive output terminal of the battery module, and the negative output member 5 and the positive output member 4 are respectively disposed at two opposite ends of the insulating support 2 in the first direction. The positive output member 4 and the negative output member 5 are each configured to be connected to the electrical equipment outside the battery module to achieve the electrical energy output of the battery module. In some embodiments, the positive output member 4 includes a first main body 41 and at least one fourth connection body 42 protruding from a side of the first main body 41. The fourth connection body 42 is configured to be clamped with the battery cell 200 on an end of the battery module 200 in the first direction. The negative output member 5 includes a second main body 51 and at least one fifth connection body 52 protruding from a side of the second main body 51. The fifth connection body 52 is configured to be clamped with the peripheral side of the battery cell 200 on the other end of the battery module in the first direction. An end of the fourth connection body 42 facing away from the first main body 41 is provided with a fourth clamping hole 421, and the fourth clamping hole 421 is clamped with the pole 201 of the battery cell 200. An end of the fifth connection body 52 facing away from the second main body 51 is provided with a fifth clamping hole 521, and the fifth clamping hole 521 is clamped with the outer peripheral side of the battery cell 200. The fourth clamping hole 421 is disposed on the positive output member 4, and the fifth clamping hole 521 is disposed on the negative output member 5, so that the positive output member 4 and the negative output member 5 are each clamped with the battery cell 200. When the battery module is assembled in this manner, the welding operation can be avoided completely, thereby ensuring the high assembly efficiency of the battery module and the production quality of the battery module.

Multiple third elastic clamping claws 422 are circumferentially disposed at an outer peripheral portion of the fourth clamping hole 421, and the third elastic clamping claw 422 is configured to tightly clamp the pole 201 of the battery cell 200. Multiple fourth elastic clamping claws 522 are circumferentially disposed at an outer peripheral portion of the fifth clamping hole 521, and the fourth elastic clamping claw 522 is configured to tightly clamp the outer peripheral side of the battery cell 200.

In some embodiments, referring to FIG. 1, FIG. 9, FIG. 10 and FIG. 12, a groove 27 is concavely disposed on a side of the insulating support 2 facing away from the battery cell 200, the first main body 41 is installed in the groove 27, a side wall of the groove 27 is provided with a first avoidance hole 23, and the groove 27 communicates with the side of the insulating support 2 facing the battery cell 200 through the first avoidance hole 23. The fourth connection body 42 is connected to the pole 201 of the battery cell 200 in a manner of passing through the first avoidance hole 23 from the side of the insulating support 2 facing away from the battery cell 200. The second main body 51 is connected to the multiple fifth connection bodies 52 through connection segments 53, separately, the second main body 51 is installed on the side of the insulating support 2 facing away from the battery cell 200, the fifth connection body 52 is located on the side of the insulating support 2 facing the battery cell 200, and the second avoidance hole 29 is also disposed on the insulating support 2. The fifth connection body 52 is connected to the outer peripheral side of the battery cell 200 in a manner of passing through the second avoidance hole 29 from the side of the insulating support 2 facing away from the battery cell 200.

The fourth connection body 42 is provided with the second groove 212 on the side of the insulating support 2 facing the battery cell 200, and the fourth connection body 42 is limited in the second groove 212. The fifth connection body 52 is provided with the first groove 211 on the side of the insulating support 2 facing the battery cell 200, and the fifth connection body 52 is limited in the first groove 211.

In some embodiments, the through holes 22 penetrate through groove bottoms of multiple second grooves 212, the collection terminals 31 are in one-to-one correspondence with the multiple second grooves 212, and the multiple collection terminals 31 are connected to the second connection bodies 112 or the fourth connection bodies 42 through the through holes 22.

In this example, the groove bottom of each second groove 212 has one third clamping hole 24.

Referring to FIG. 1, the battery module further includes a box body (not shown in the drawings), and a side of the multiple battery cells 200 facing away from the insulating support 2 is fixed to the box body through a structural adhesive layer 6. The multiple battery cells 200 and the box body are connected into a whole through the structural adhesive layer 6 to prevent the battery cells 200 from being scratched due to the vibration of the battery cells 200 inside the box body. In some embodiments, the structural adhesive layer 6 is a thermal conductive structural adhesive, and the thermal conductive structural adhesive has heat-conducting property and is conducive to heat dissipation of the battery cells 200.

In practical implementation, the positive output member 4 and the negative output member 5 are installed on the insulating support 2 in advance, and each busbar 100 is connected to the collection terminal 31 on each FPC board 3 in advance, so that the positive output member 4, the negative output member 5, the busbar 100 and the insulating support 2 form a combination body. After the multiple battery cells 200 are arranged, the combination body is fastened on the multiple battery cells 200, and the multiple battery cells 200 are fixed to the box body through the structural adhesive, whereby the assembly of the battery module is completed. In this way, the assembly efficiency of the battery module is high, and the production quality of the battery module is good.

In the description herein, the orientational or positional relationships indicated by terms "above", "below", "left", "right" and the like are based on the orientational or positional relationships shown in the drawings, and are merely for ease of description and simplifying an operation, rather than indicating or implying that the referred device or element must have a specific orientation and be constructed and operated in a specific orientation, and thus it is not to be construed as limiting the present application. Moreover, the terms "first" and "second" are used only to distinguish between descriptions and have no special meaning.

In the description of this specification, the terms "an embodiment," "example" and the like mean that features, structures, materials, or characteristics described in connection with this embodiment or this example are included in at least one embodiment or example of the present application. In this specification, illustrative expressions of these terms do not necessarily refer to the same embodiment or example.

In addition, although this specification is described according to the embodiments, each embodiment does not only include one independent technical solution. This description of the specification is for the sake of clarity, those skilled in the art should take the specification as a whole, and the technical solutions in multiple embodiments may also be appropriately combined to form other embodiments that may be understood by those skilled in the art.

## Claims

1. A conductive member (11), **characterized by** comprising a first connection body (111) and a second connection body (112) connected to the first connection body (111);
wherein the first connection body (111) is configured to be clamped with an outer peripheral side of one battery cell (200) of two adjacent battery cells (200) in a first direction (X), and the second connection body (112) is configured to be in contact with a pole (201) of the other battery cell (200) of the two adjacent battery cells (200) in the first direction (X).

2. The conductive member of claim 1, wherein the first connection body (111) is provided with a first clamping hole (1111), the first clamping hole (1111) penetrates through two sides of the first connection body (111) in a thickness direction, the first clamping hole (1111) is configured to clamp the battery cell (200); and
the second connection body (112) is provided with a second clamping hole (1121), and the second clamping hole (1121) is configured to clamp the pole (201).

3. The conductive member of claim 2, wherein a peripheral portion of the first clamping hole (1111) is provided with a plurality of first elastic clamping claws (1112), the plurality of first elastic clamping claws (1112) are configured to encircle a circle around a center of the first clamping hole (1111), two adjacent first elastic clamping claws (1112) among the plurality of first elastic clamping claws (1112) are distributed at intervals, and the plurality of first elastic clamping claws (1112) are clamped with the outer peripheral side of the battery cell (200).

4. The conductive member of claim 2, wherein a peripheral portion of the second clamping hole (1121) is provided with a plurality of second elastic clamping claws (1122), the plurality of second elastic clamping claws (1122) are configured to encircle a circle around a center of the second clamping hole (1121), two adjacent second elastic clamping claws (1122) among the plurality of second elastic clamping claws (1122) are distributed at intervals, and the plurality of second elastic clamping claws (1122) are clamped with the pole (201).

5. The conductive member of claim 4, wherein the plurality of second elastic clamping claws (1122) are disposed protruding on a side of the second connection body (112) facing the battery cell (200), ends of the plurality of second elastic clamping claws (1122) facing away from the second connection body (112) are each provided with an abutment end (11221), and the abutment end (11221) abuts against a pole adapter plate (202) located at an end of the battery cell (200).

6. The conductive member of any one of claims 1 to 5, wherein the first connection body (111) and the second connection body (112) are distributed at intervals and in parallel in a second direction (Z);
the conductive member (11) further comprises a third connection body (113), the first connection body (111) is connected to the third connection body (113) at an included angle, and the second connection body (112) is connected to the third connection body (113) at an included angle; and wherein the second direction (Z) is perpendicular to the first direction (X).

7. A busbar (100), **characterized by** comprising a plurality of conductive bars (1) sequentially distributed in a first direction (X), wherein each conductive bar (1) of the plurality of conductive bars (1) comprises at least one conductive member (11) of any one of claims 1 to 6;
a first connection body (111) of each conductive member (11) of the at least one conductive member (11) is configured to be connected to one battery cell (200) of two adjacent battery cells (200) in the first direction (X); and
a second connection body (112) of each conductive member (11) of the at least one conductive member (11) is configured to be in contact with the other battery cell (200) of the two adjacent battery cells (200) in the first direction (X).

8. The busbar of claim 7, wherein a conductive bar (1) of the plurality of conductive bars (1) has at least two conductive members (11), all conductive members (11) of a same conductive bar (1) of the plurality of conductive bars (1) are sequentially distributed in a third direction (Y), the third direction (Y) forms an included angle with the first direction (X); and
first connection bodies (111) of two adjacent conductive members (11) in a same conductive bar (1) of the plurality of conductive bars (1) are connected with each other, and second connection bodies (112) of two adjacent conductive members (11) in a same conductive bar (1) of the plurality of conductive bars (1) are spaced apart from each other.

9. A battery module, **characterized by** comprising an insulating support (2), a plurality of battery cells (200), and the busbar (100) of claim 7 or 8, wherein
the insulating support (2) is disposed on a side of the plurality of battery cells (200) in a second direction (Z), a flexible printed circuit, FPC, board (3) is disposed on the insulating support (2);
a plurality of conductive bars (1) in the busbar (100) are electrically connected to the FPC board (3), separately; and
a first limiting groove is disposed on a side of the insulating support (2) facing the plurality of battery cells (200), and each conductive bar (1) of the plurality of conductive bars (1) is limited in the first limiting groove.

10. The battery module of claim 9, wherein a second limiting groove (28) is disposed on the insulating support (2), the second limiting groove (28) is located on a side of the insulating support (2) facing away from the first limiting groove, the FPC board (3) is limited in the second limiting groove (28);
the FPC board (3) has a plurality of collection terminals (31), each conductive bar (1) of the plurality of conductive bars (1) is correspondingly provided with one collection terminal (31) of the plurality of collection terminals (31); and
the insulating support (2) is provided with a through hole (22) in a penetrating manner, the through hole (22) communicates with the first limiting groove and the second limiting groove (28), and a collection terminal (31) of the plurality of collection terminals (31) passes through the through hole (22) and is connected to a respective one of the plurality of conductive bars (1).

11. The battery module of claim 10, wherein the first limiting groove comprises a plurality of groove groups (21), the plurality of groove groups (21) are sequentially distributed in a first direction (X), and the plurality of groove groups (21) are in one-to-one correspondence with the plurality of conductive bars (1);
each groove group (21) of the plurality of groove groups (21) comprises first grooves (211) and second grooves (212), the first grooves (211) in each groove group (21) of the plurality of groove groups (21) are in one-to-one correspondence with the second grooves (212) in each groove group (21) of the plurality of groove groups (21); and
a first connection body (111) of each conductive bar (1) of the plurality of conductive bars (1) is correspondingly provided with one first groove (211) of the first grooves (211), a second connection body (112) of each conductive bar (1) of the plurality of conductive bars (1) is correspondingly provided with one second groove (212) of the second grooves (212), the first connection body (111) is limited in the first groove (211), the second connection body (112) is limited in the second groove (212), and a first communication port (25) is disposed between the first groove (211) and a second groove (212) corresponding to the first groove (211).

12. The battery module of claim 11, wherein each groove group (21) of the plurality of groove groups (21) has at least two first grooves (211) and at least two second grooves (212);
all the first grooves (211) in each groove group (21) of the plurality of groove groups (21) are sequentially distributed in a third direction (Y), all the second grooves (212) in each groove group (1) of the plurality of groove groups (1) are sequentially distributed in the third direction (Y); and
two adjacent first grooves (211) of a same groove group (21) of the plurality of groove groups (21) communicate with each other through a second communication port (26), and two adjacent second grooves (212) of a same groove group (21) of the plurality of groove groups (21) are spaced apart from each other.

13. The battery module of claim 12, wherein of two adjacent groove groups (21) among the plurality of groove groups (21), a first groove (211) of first grooves (211) of one groove group (21) of the two adjacent groove groups (21) partially extends into a respective one of second grooves (212) of the other groove group (21) of the two adjacent groove groups (21).

14. The battery module of claim 9, wherein the insulating support (2) is further provided with a plurality of third clamping holes (24), the plurality of third clamping holes (24) are in one-to-one correspondence with the plurality of battery cells (200), and each of the plurality of third clamping holes (24) is configured to be clamped with a pole (201).

15. The battery module of claim 9, further comprising a negative output member (5) and a positive output member (4), wherein the negative output member (5) is clamped with a negative output terminal of the battery module, the positive output member (4) is clamped with a positive output terminal of the battery module, and the negative output member (5) and the positive output member (4) are respectively disposed at two opposite ends of the insulating support (2) in a first direction (X).
